(19) Europäisches Patentamt
European Patent Office
Office européen des brevets

(11) **EP 2 426 352 B1**

(12) **EUROPÄISCHE PATENTSCHRIFT**

(45) Veröffentlichungstag und Bekanntmachung des Hinweises auf die Patenterteilung:
**10.12.2014  Patentblatt 2014/50**

(51) Int Cl.:
*F03D 7/02* (2006.01)          *F03D 7/04* (2006.01)

(21) Anmeldenummer: **11007038.0**

(22) Anmeldetag: **30.08.2011**

(54) **Verfahren zur Drehzahlregelung einer Windenergieanlage**

Method for regulating the rotational speed of a wind turbine

Méthode de régulation de la vitesse de rotation d'une éolienne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2010  DE 102010044433**

(43) Veröffentlichungstag der Anmeldung:
**07.03.2012  Patentblatt 2012/10**

(73) Patentinhaber: **Nordex Energy GmbH**
**22419 Hamburg (DE)**

(72) Erfinder: **Drossel, Detlef**
**22851 Norderstedt (DE)**

(74) Vertreter: **Hauck Patent- und Rechtsanwälte**
**Neuer Wall 50**
**20354 Hamburg (DE)**

(56) Entgegenhaltungen:
EP-A1- 1 816 347          EP-A1- 2 063 110
EP-A1- 2 107 236          EP-A1- 2 146 093
EP-A2- 1 643 122          WO-A2-2007/089136
DE-A1-102007 063 082     GB-A- 2 466 649

**Beschreibung**

Die Erfindung betrifft ein Verfahren zur Drehzahlregelung einer Windenergieanlage, die einen Turm, eine auf dem Turm befestigte Gondel und einen Triebstrang aufweist, der einen um eine Achse drehbar in der Gondel gelagerten Rotor mit mindestens einem Rotorblatt und einen von dem Rotor angetriebenen Generator umfasst, sowie eine solche Windenergieanlage. Bei dem Verfahren wird eine Drehzahl eines Triebstrangelements gemessen, das entsprechend einem Übersetzungsverhältnis mit dem Rotor rotiert. Ebenfalls gemessen wird eine Bewegung der Gondel relativ zum Erdboden. Die Regelung der Drehzahl auf einen Drehzahlsollwert erfolgt mit einem Drehzahlregler, der ein Generatormoment und/oder einen Blatteinstellwinkel vorgibt.

Ein solches Verfahren ist aus der europäischen Patentanmeldung EP 1 643 122 A2 bekannt, die ein Schwingungsdämpfungssystem betrifft. Bei dem bekannten Verfahren wird die Generatordrehzahl gemessen und einem Drehzahlregler als Eingangsgröße zugeführt. Der Drehzahlregler ermittelt ausgehend von der gemessenen Generatordrehzahl einen Sollwert für das Generatormoment. Um Schwingungen des Systems entgegenzuwirken, wird der von dem Drehzahlregler ermittelte Sollwert des Generatormoments moduliert. Hierzu erzeugt ein Vibrationsdämpfer ein Ausgangssignal, das ein zusätzliches Drehmoment für den Generator vorgibt. Dieses Ausgangssignal wird auf Grundlage der gemessenen Generatordrehzahl berechnet, wobei diejenigen Frequenzanteile des Generatordrehzahlsignals verstärkt einfließen, die den zu dämpfenden Schwingungsfrequenzen entsprechen. Das zusätzliche Generatormoment soll sowohl Schwingungen des Triebstrangs als auch des Turms entgegenwirken. Um das Frequenzverhalten des Schwingungsdämpfers auf die Windenergieanlage abzustimmen, werden die zu dämpfenden Eigenfrequenzen bestimmt. Hierzu ist unter anderem daran gedacht, Signale eines Beschleunigungssensors auszuwerten.

Aus der europäischen Patentanmeldung EP 1 816 347 A1 ist ein ähnliches Verfahren bekannt, bei dem ein Sensor Schwingungen senkrecht zur Rotorachse detektiert und eine Steuerung so auf den Rotor einwirkt, dass die Schwingungen gedämpft werden. Das Einwirken auf den Rotor kann über das Generatormoment oder den Blatteinstellwinkel erfolgen.

Den beiden bekannten Verfahren ist gemeinsam, dass auftretenden Turmschwingungen durch zusätzliche, auf den Rotor ausgeübte Momente entgegengewirkt werden soll. Die Verfahren stützen sich damit auf einen Zusammenhang zwischen dem zusätzlich ausgeübten Moment und einem daraus resultierenden Gegenmoment auf den Turm beziehungsweise die Gondel der Windenergieanlage. Der genaue Zusammenhang hängt vom Aufbau der Windenergieanlage ab. Außerdem spielen äußere Einflüsse wie zum Beispiel Windhöhengradienten und Schräganströmungen, die sich ständig ändern und schwer zu erfassen sind, eine große Rolle.

Aus der Druckschrift EP 2 107 236 A1 ist ein Verfahren zur Dämpfung von Turmschwingungen einer Windenergieanlage bekannt geworden. Bei dem bekannten Verfahren wird eine Rotordrehzahl gemessen und ein Drehzahlsollwert vorgegeben. Mit einer zusätzlichen Messung wird eine Neigung des Turms erfasst. Mit Hilfe der erfassten Neigung wird der vorgegebene Drehzahlsollwert modifiziert. Die Druckschrift EP 2 063 110 A1 betrifft ein sehr ähnliches Verfahren, bei dem ebenfalls ein Drehzahlsollwert modifiziert wird.

Davon ausgehend ist es die Aufgabe der Erfindung, ein Verfahren zur Drehzahlregelung einer Windenergieanlage und eine Windenergieanlage zur Verfügung zu stellen, bei dem oder der das Auftreten von Turmschwingungen verringert wird.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Drehzahlregelung einer Windenergieanlage, die einen Turm, eine auf dem Turm befestigte Gondel und einen Triebstrang aufweist, der einen um eine Achse drehbar in der Gondel gelagerten Rotor mit mindestens einem Rotorblatt und einen von dem Rotor angetriebenen Generator umfasst, und hat die folgenden Schritte:

- Messen einer Drehzahl eines Elements des Triebstrangs, das entsprechend einem Übersetzungsverhältnis mit dem Rotor rotiert,

- Messen einer Bewegung der Gondel relativ zum Erdboden,

- Regelung der Drehzahl auf einen Drehzahlsollwert mit einem Drehzahlregler, der ein Generatormoment und/oder einen Blatteinstellwinkel vorgibt, wobei

- die in einem gondelfesten Bezugssystem gemessene Drehzahl in eine korrigierte Drehzahl umgerechnet wird, die der Drehzahl des Rotors in einem erdbodenfesten Bezugssystem multipliziert mit dem Übersetzungsverhältnis entspricht, und

- der Drehzahlregler als Eingangsgröße die korrigierte Drehzahl verwendet.

Das Verfahren eignet sich für Windenergieanlagen beliebiger Bauart, insbesondere mit einer im Wesentlichen horizontalen Rotorachse. Insbesondere kann es sich um Windenergieanlagen handeln, die mit variabler Drehzahl betrieben werden. Der Generator, insbesondere ein doppelt gespeister Asynchrongenerator, kann über einen Umrichter mit Gleichspannungszwischenkreis an ein Versorgungsnetz gekoppelt sein. Zwischen Rotor und Generator kann ein Getriebe angeordnet sein.

Bei dem Verfahren wird eine Drehzahl eines Triebstrangelements gemessen. Das Triebstrangelement kann der Rotor sein. In diesem Fall ist das Übersetzungsverhältnis gleich eins. Das Triebstrangelement kann alternativ der Rotor des Generators sein, dann entspricht das Übersetzungsverhältnis der Übersetzung eines gegebenenfalls zwischen Rotor und Generator befindlichen Getriebes. Das Triebstrangelement kann auch ein beliebiges anderes Element des Triebstrangs sein, etwa eine Welle eines zwischen Rotor und Generator befindlichen Getriebes. In diesem Fall entspricht das Übersetzungsverhältnis dem Verhältnis der Drehzahlen dieses Triebstrangelements und des Rotors. Das Übersetzungsverhältnis kann fest vorgegeben sein oder, insbesondere bei Verwendung eines Wechselgetriebes oder eines gestuften oder stufenlosen Drehzahlwandlers, wechselnde Werte annehmen. Der Begriff Drehzahl umfasst im Sprachgebrauch dieser Anmeldung auch eine entsprechende Winkelgeschwindigkeit, die sich nur um einen konstanten Faktor von $2\pi$ von der Drehzahl im strengen Wortsinn unterscheidet. Naturgemäß wird die Drehzahl in einem gondelfesten Bezugssystem gemessen, beispielsweise durch einen in der Gondel montierten Inkrementalgeber.

Die Regelung der Drehzahl erfolgt auf einen Drehzahlsollwert, der zum Beispiel von einer Betriebsführung oder Steuerung der Windenergieanlage vorgegeben wird, insbesondere in Abhängigkeit von einer gemessenen Windgeschwindigkeit. Hierzu findet ein Drehzahlregler Verwendung, der eine Abweichung der gemessenen Drehzahl von dem Drehzahlsollwert feststellt und davon ausgehend ein Generatormoment und/oder einen Blatteinstellwinkel vorgibt. Bei einer mit variabler Drehzahl betriebenen Windenergieanlage, bei der der Generator über einen Umrichter mit einem Versorgungsnetz gekoppelt ist, wird häufig zwischen einem Teillast- und einem Volllastbetrieb unterschieden. Im Teillastbetrieb wird der Drehzahlsollwert in Abhängigkeit von der Windgeschwindigkeit nach Maßgabe einer optimalen Schnelllaufzahl vorgegeben. Der Blatteinstellwinkel wird auf einem festen Wert gehalten, bei dem der Rotor ein maximales Moment aus dem Wind aufnimmt, und als Stellgröße dient das Generatormoment. Im Volllastbetrieb entsprechen Drehzahlsollwert und Generatormoment im Wesentlichen ihren Nennwerten, so dass die Nennleistung der Windenergieanlage erreicht wird. Stellgröße für die Drehzahlregelung ist dann der Blatteinstellwinkel.

Bei der Erfindung wird die in einem gondelfesten Bezugssystem gemessene Drehzahl in eine korrigierte Drehzahl umgerechnet. Die korrigierte Drehzahl gibt die Drehzahl des Rotors in einem erdbodenfesten Bezugssystem multipliziert mit dem Übersetzungsverhältnis an, also die Rotordrehzahl im ruhenden Bezugssystem umgerechnet auf die Ebene des für die Drehzahlmessung herangezogenen Triebstrangelements. Anstatt die gemessene Drehzahl als Eingangsgröße für den Drehzahlregler zu verwenden, wird diese korrigierte Drehzahl verwendet. Die Drehzahlregelung erfolgt auf Grundlage der korrigierten Drehzahl.

Das Umrechnen der gemessenen Drehzahl in die korrigierte Drehzahl erfolgt auf Grundlage der gemessenen Bewegung der Gondel relativ zum Erdboden. Es versteht sich, dass die Bewegung der Gondel relativ zum Erdboden nicht vollständig, das heißt in alle Raumrichtungen und/oder um mehrere Drehachsen, erfolgen muss. Vielmehr ist es ausreichend, eine Bewegung der Gondel zu messen, aus der zumindest näherungsweise Rückschlüsse auf den durch die Relativbewegung verursachten Messfehler möglich sind.

Die korrigierte Drehzahl bezieht sich auf ein erdbodenfestes Bezugssystem, das heißt, sie beschreibt die Drehzahl unabhängig von einer Relativbewegung zwischen der Gondel und dem Erdboden. Der Begriff "Erdboden" ist dabei gleichzusetzen insbesondere mit einem Fundament der Windenergieanlage, auf dem der Turm steht. Da bei den hier betrachteten Drehzahlregelungsverfahren nur der Betrag der Drehzahl relevant ist, spielt die Richtung der Rotorachse keine Rolle. Das Bezugssystem, auf das sich die Drehzahl bezieht, kann eine beliebige Orientierung aufweisen. Es muss daher in diesem Sinne strenggenommen nicht mit dem Erdboden fest verknüpft sein, sondern kann beispielsweise einer Azimutverstellung der Gondel folgen. Die Windenergieanlage kann ein Azimutverstellsystem aufweisen, mit dem die Gondel zwecks Windrichtungsnachführung gegenüber dem Turm gedreht wird.

Die Erfindung beruht auf der Erkenntnis, dass bei der Messung der Drehzahl systematische Fehler auftreten, die durch eine Relativbewegung zwischen Gondel und Erdboden bedingt sind. Führt der Turm beispielsweise eine seitliche, d.h. orthogonal zu einer Längsachse des Turms und zur Rotorachse gerichtete Schwingungsbewegung aus, bewegt sich die Gondel und mit ihr das Bezugssystem, in dem die Drehzahlmessung erfolgt, annähernd auf einer Kreisbahn. Selbst wenn die Drehzahl des Rotors im erdbodenfesten Bezugssystem konstant sein sollte, ändert sie sich bei einer solchen Bewegung der Gondel relativ zum Erdboden, insbesondere periodisch entsprechend der Schwingungsbewegung der Gondel. Wird die im gondelfesten Bezugssystem gemessene Drehzahl dem Regelungsverfahren zu Grunde gelegt, wird den scheinbaren Drehzahlabweichungen des Rotors ständig entgegengewirkt. Hierdurch werden Gegenmomente auf die Gondel beziehungsweise den Turm der Windenergieanlage mit entsprechender Periodizität ausgeübt, die im ungünstigsten Fall die Schwingungsbewegung resonanzartig verstärken kann.

Bei der Erfindung werden diese Schwierigkeiten dadurch umgangen, dass der aus den Schwingungen resultierende Messfehler der Drehzahl eliminiert wird, bevor er sich auf die Stellgrößen der Drehzahlregelung auswirken kann.

Im Vergleich zu den eingangs beschriebenen, aus dem Stand der Technik bekannten Verfahren, den Turmschwingungen durch eine aktive Dämpfung mit einem bestimmten Frequenzverhalten entgegenzuwirken, ist dies nicht nur einfacher, sondern ist auch nicht mit einer in bestimmten Frequenzbereichen beeinträchtigten Funktion des Regelkreises verbunden.

In einer Ausgestaltung wird auf Grundlage der gemessenen Bewegung der Gondel eine Kompensationsdrehzahl ermittelt, die eine Drehung der Gondel um die Achse des Rotors herum repräsentiert, und das Umrechnen der gemessenen Drehzahl in die korrigierte Drehzahl erfolgt durch Addieren der gemessenen Drehzahl und der Kompensationsdrehzahl. Bei der Kompensationsdrehzahl kann es sich um eine Drehzahl beziehungsweise Winkelgeschwindigkeit der Gondel um die Rotorachse herum im erdbodenfesten Bezugssystem handeln, oder um eine durch einen konstanten Faktor hiermit gekoppelte Drehzahl. Grundsätzlich kann das Umrechnen von der gemessenen Drehzahl in die korrigierte Drehzahl auf beliebige Art und Weise bewerkstelligt werden. Das Ermitteln einer Kompensationsdrehzahl und die anschließende Addition zur gemessenen Drehzahl stellt eine besonders einfache und anschauliche Lösung dar.

Das Ermitteln der Kompensationsdrehzahl kann eine Multiplikation mit dem Übersetzungsverhältnis zwischen der gemessenen Drehzahl und der Rotordrehzahl umfassen. Diesem Vorgehen liegt die Annahme zugrunde, dass die zu beachtenden Trägheitsmomente vom Rotor dominiert werden. Dann bleibt die Drehzahl des Rotors im erdbodenfesten Bezugssystem bei einer Turmschwingung näherungsweise konstant. Der systematische Fehler der gemessenen Drehzahl ist dann um einen Faktor größer als die die Bewegung der Gondel beschreibende Drehzahl. Der Faktor entspricht dem Übersetzungsverhältnis zwischen der gemessenen Drehzahl und der Rotordrehzahl. Er wird bei der Ermittlung der Kompensationsdrehzahl berücksichtigt, insbesondere indem eine ermittelte Drehzahl der Gondel mit diesem Faktor multipliziert wird. Die Kompensationsdrehzahl entspricht dann dem von der Turmschwingung verursachten Fehler der gemessenen Drehzahl, sodass die Addition theoretisch eine vollständige Kompensation des Messfehlers bewirkt.

In einer Ausgestaltung erfolgt das Messen der Bewegung der Gondel durch Messen einer Beschleunigung in einer Richtung, die orthogonal zur Achse des Rotors und orthogonal zu einer Längsachse des Turmes ist. Die Linearbeschleunigung in der genannten Richtung erlaubt Rückschlüsse auf die Amplitude der Turmschwingung, die für den erläuterten Messfehler maßgeblich ist. Die Messung der Beschleunigung kann insbesondere mit einem Beschleunigungssensor erfolgen, der in der Gondel oder im oder am Turmkopf angeordnet ist. Gegebenenfalls können auch mehrere am Turmkopf angeordnete Beschleunigungssensoren, die die Beschleunigung in unterschiedlichen Richtungen messen, verwendet werden. Aus den Messwerten der so angeordneten Beschleunigungssensoren kann die Beschleunigung in der genannten Richtung für jede Gondelstellung berechnet werden.

In einer Ausgestaltung umfasst das Ermitteln der Kompensationsdrehzahl eine Division durch eine effektive Turmhöhe, die geringer ist als die reale Höhe des Turmes. Wie vorstehend erläutert, ist die Amplitude der Turmschwingung für den Messfehler der im gondelfesten Bezugssystem gemessenen Drehzahl von Bedeutung. Wie sich die Schwingungsamplitude des Turmes auf die Winkellage der Gondel im erdbodenfesten Bezugssystem auswirkt, ist insbesondere von den mechanischen Eigenschaften des Turmes abhängig. Eine exakte Berechnung muss die Biegung des Turmes berücksichtigen und ist schwierig durchzuführen. Eine praktikable Näherungslösung stellt die Verwendung einer effektiven Turmhöhe dar. Die effektive Turmhöhe ist diejenige Turmhöhe eines fiktiven, als starr angenommenen Turms, bei dem bei einer bestimmten Schwingungsamplitude der Turmkopf beziehungsweise die Gondel die gleichen Neigungswinkel annimmt wie bei der gleichen Schwingungsamplitude des realen, sich biegenden Turms. Die effektive Turmhöhe ist geringer als die reale Höhe des Turmes. Sie kann in Modellrechnungen, Schätzungen oder Messungen an realen Türmen ermittelt werden.

In einer Ausgestaltung erfolgt das Messen der Bewegung der Gondel durch Messen einer Winkelbeschleunigung um die Achse des Rotors herum. Bei diesem Messverfahren wird von Vornherein nur diejenige Komponente der Bewegung der Gondel erfasst, die zu der erläuterten Verfälschung der gemessenen Drehzahl führt. Dies kann die Umrechnung der gemessenen Drehzahl in die korrigierte Drehzahl vereinfachen.

In einer Ausgestaltung umfasst das Ermitteln der Kompensationsdrehzahl ein Integrieren einer gemessenen Beschleunigung über die Zeit. Damit niederfrequente Signale, insbesondere Sensor-Offsetfehler, bei der Integration nicht zu Fehlern führen, kann vor der Integration ein Hochpassfilter auf die gemessene Beschleunigung angewendet werden.

In einer Ausgestaltung erfolgt das Messen der Bewegung der Gondel durch Messen eines Winkels der Gondel um die Achse des Rotors herum, relativ zum Erdboden. Ein wiederholtes Messen dieser Winkellage erlaubt ebenfalls eine Bestimmung der für den Messfehler maßgeblichen Drehung der Gondel um die Achse des Rotors herum. Für die Messung kann insbesondere ein Neigungssensor oder ein Gyroskopsensor verwendet werden.

Die obige Aufgabe wird ebenfalls gelöst durch die Windenergieanlage mit den Merkmalen des Anspruchs 8. Vorteilhafte Ausgestaltungen sind in den sich anschließenden Unteransprüchen angegeben.

Die Windenergieanlage hat

- einen Turm,

- eine auf dem Turm befestigte Gondel,

- einen Triebstrang, der einen um eine Achse drehbar in der Gondel gelagerten Rotor mit mindestens einem Rotorblatt und einen von dem Rotor angetriebenen Generator umfasst,

- eine Einrichtung zur Messung einer Drehzahl eines Elements des Triebstrangs, das entsprechend einem Übersetzungsverhältnis mit dem Rotor rotiert,

- eine Einrichtung zur Messung einer Bewegung der Gondel relativ zum Erdboden,

- einen Drehzahlregler, der zur Regelung der Drehzahl auf einen Drehzahlsollwert durch Vorgeben eines Generatormoments und/oder eines Blatteinstellwinkels ausgebildet ist, wobei

- eine Einrichtung zur Umrechnung der in einem gondelfesten Bezugsystem gemessenen Drehzahl in eine korrigierte Drehzahl, die der Drehzahl des Rotors in einem erdbodenfesten Bezugssystem multipliziert mit dem Übersetzungsverhältnis entspricht, vorhanden ist und

- der Drehzahlregler so mit der Einrichtung zur Umrechung verbunden ist, dass er als Eingangsgröße die korrigierte Drehzahl verwendet.

Es versteht sich, dass Teile der Windenergieanlage, insbesondere die Einrichtung zur Umrechnung, in Form von Software, die auf einem Steuerrechner der Windenergieanlage läuft, verwirklicht sein können. Hinsichtlich der Erläuterung der Merkmale der Windenergieanlage und der Vorteile wird auf die vorstehenden Erläuterungen der korrespondierenden Verfahrensmerkmale und -vorteile verwiesen. Die Windenergieanlage ist insbesondere zur Ausführung des obigen Verfahrens bestimmt.

Die Erfindung wird nachfolgend anhand eines in Figuren dargstellten Ausführungsbeispiels näher erläutert. Es zeigen:

Figur 1    eine erfindungsgemäße Windenergieanlage in einer vereinfachten, schematischen Ansicht von vom,

Figur 2    ein Flussdiagramm zur Veranschaulichung des erfindungsgemäßen Verfahrens,

Figur 3    einen Wirkungsplan zur Erläuterung der Wechselwirkungen der unterschiedlichen physikalischen Größen,

Figur 4    eine schematische Darstellung zum Begriff der effektiven Turmhöhe.

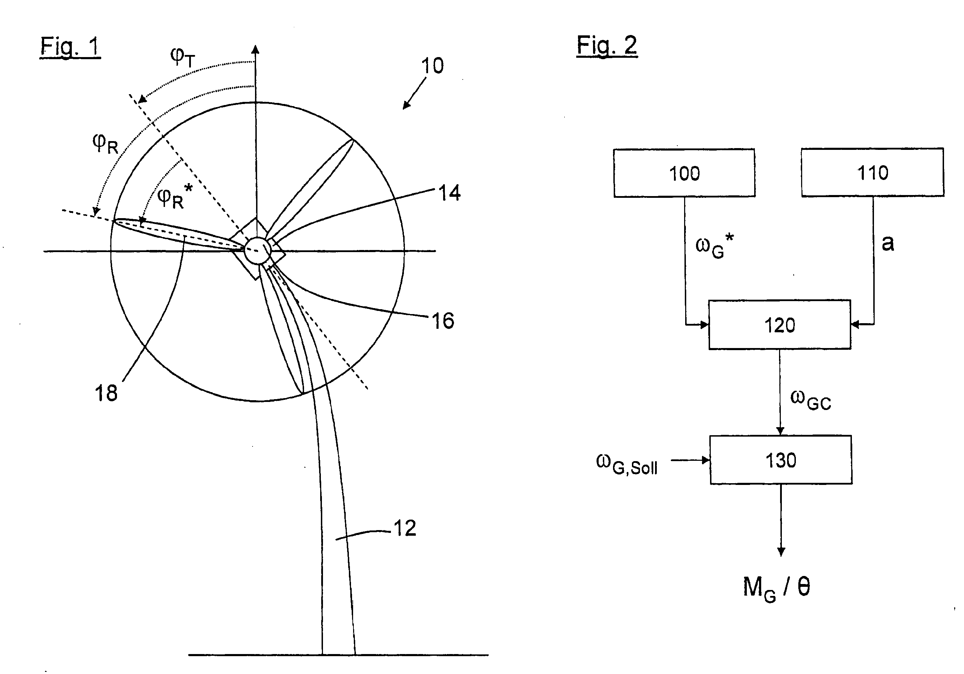

Figur 1 zeigt eine Windenergieanlage 10 mit einem Turm 12, einer auf dem Turm befestigten Gondel 14. Der Triebstrang der Windenergieanlage 10 umfasst einen Rotor 16, der drehbar in der Gondel 14 gelagert ist und drei Rotorblätter 18 aufweist, sowie einen in der Figur 1 nicht dargestellten Generator, der in der Gondel 14 angeordnet ist und von dem Rotor 16 angetrieben wird.

Weiterhin in den Figuren eingezeichnet sind drei Winkel, die wie folgt definiert sind:

Der Winkel $\varphi_T$ bezeichnet einen Neigungswinkel der Gondel 14 gegenüber der Senkrechten, also in einem erdbodenfesten Bezugssystem. Der Neigungswinkel $\varphi_T$ der Gondel entspricht im Wesentlichen der aus der Biegung des Turms 12 resultierenden Neigung des Turmkopfes. Die Neigung $\varphi_T$ resultiert aus einer Turmschwingung, wobei die Auslenkung und Neigung der Gondel 14 und die Biegung des Turmes 12 in der Figur 1 übertrieben dargestellt sind.

Der Winkel $\varphi_R$ bezeichnet die Winkellage des Rotors, im Beispiel gemessen von einer Senkrechten, also in einem erdbodenfesten Bezugssystem, bis zur Mittellinie eines Rotorblatts 18.

Als dritter Winkel $\varphi_R^*$ eingezeichnet ist die Winkellage desselben Rotorblatts 18 gemessen in einem gondelfesten Bezugssystem, das in der Figur um den Winkel $\varphi_T$ gegenüber der Vertikalen geneigt ist. Dieser Winkel wird mit $\varphi_R^*$ bezeichnet, wobei das Sternchen hier wie auch bei weiteren im Folgenden erläuterten Größen auf das gondelfeste Bezugssystem hinweist.

Wie sich aus der Figur unmittelbar ablesen lässt, gilt zwischen den drei Winkeln die folgende Beziehung:

$$\varphi_R^* = \varphi_R - \varphi_T \qquad\qquad (1)$$

Ableiten nach der Zeit führt zu dem folgenden Zusammenhang für die entsprechenden Winkelgeschwindigkeiten, die in dieser Anmeldung wie oben erläutert auch als Drehzahlen bezeichnet werden:

$$\omega_R^* = \omega_R - \omega_T \qquad \qquad (2)$$

$\omega_R^*$ ist die gemessene Drehzahl des Rotors im gondelfesten Bezugssystem. Anstelle dieser Rotordrehzahl kann auch eine durch ein Übersetzungsverhältnis Ue mit der Rotordrehzahl verknüpfte Drehzahl eines anderen Triebstrangelements, etwa die Generatordrehzahl $\omega_G^*$, betrachtet werden, die ebenfalls auf das gondelfeste Bezugssystem bezogen ist:

$$\omega_G^* = \text{Ue} \cdot \omega_R^* = \text{Ue} \cdot \omega_R - \text{Ue} \cdot \omega_T. \qquad (3)$$

$$= \omega_G - \text{Ue} \cdot \omega_T. \qquad (4)$$

$\omega_G^*$ entspricht einer unmittelbar messbaren Drehzahl eines Triebstrangelements, nämlich des Generators bzw. genauer eines Rotors des Generators, der entsprechend dem Übersetzungsverhältnis Ue mit dem Rotor rotiert. $\omega_G = \text{Ue} \cdot \omega_R$ ist eine korrigierte Drehzahl, die die Drehzahl des Rotors im erdbodenfesten Bezugssystem multipliziert mit dem Übersetzungsverhältnis angibt. Diese Drehzahl wird bei der Erfindung der Drehzahlregelung zugrunde gelegt.

Wie sich der letzten Gleichung entnehmen lässt, kann die Drehzahl $\omega_G$ ermittelt werden durch die Addition der gemessenen Drehzahl $\omega_G^*$ und des Terms $\text{Ue} \cdot \omega_T$, der näherungsweise wie folgt bestimmt werden kann:

$$\text{Ue} \cdot \omega_T \approx \text{Ue} \cdot \int \frac{a}{L_T} \cdot \text{dt} = \omega_C \qquad (5)$$

$\omega_C$ ist die Kompensationsdrehzahl, $\alpha$ ist die Beschleunigung der Gondel in einer Richtung orthogonal zur Längsachse des Turms und zur Drehachse des Rotors und $L_T$ ist die effektive Turmhöhe.

Die vorstehenden mathematischen Zusammenhänge gelten ganz allgemein, unabhängig vom hier betrachteten Ausführungsbeispiel.

Figur 2 zeigt die folgenden Verfahrensschritte: Im Schritt 100 wird eine Drehzahl eines mit dem Rotor rotierenden Triebstrangelements gemessen, im Beispiel die Generatordrehzahl. Ergebnis ist die gemessene Generatordrehzahl $\omega_G^*$ im gondelfesten Bezugssystem.

Im Schritt 110 wird eine Bewegung der Gondel relativ zum Erdboden gemessen. Dies erfolgt im Beispiel durch Messen einer Linearbeschleunigung $a$ in einer Richtung orthogonal zur Turmachse und zur Rotorachse. Ergebnis ist die gemessene Beschleunigung $a$.

Im Schritt 120 wird die gemessene Drehzahl $\omega_G^*$ in die korrigierte Drehzahl $\omega_{GC}$ umgerechnet. Die Drehzahl $\omega_{GC}$ entspricht der Drehzahl des Rotors im erdbodenfesten Bezugssystem, umgerechnet auf die Generatorseite. Hierzu wird zunächst ausgehend von der gemessenen Beschleunigung $a$ eine Kompensationsdrehzahl $\omega_C$ ermittelt. Diese wird zur gemessenen Drehzahl $\omega_G^*$ addiert.

Im Schritt 130 erfolgt die Drehzahlregelung, wobei als Eingangsgröße für die Drehzahlregelung die korrigierte Drehzahl $\omega_{GC}$ verwendet wird. Weitere Eingangsgröße für die Drehzahlregelung ist der Sollwert $\omega_{G,Soll}$. Ausgangsgrößen der Drehzahlregelung sind das Generatormoment $M_G$ und/oder ein Blatteinstellwinkel $\theta$.

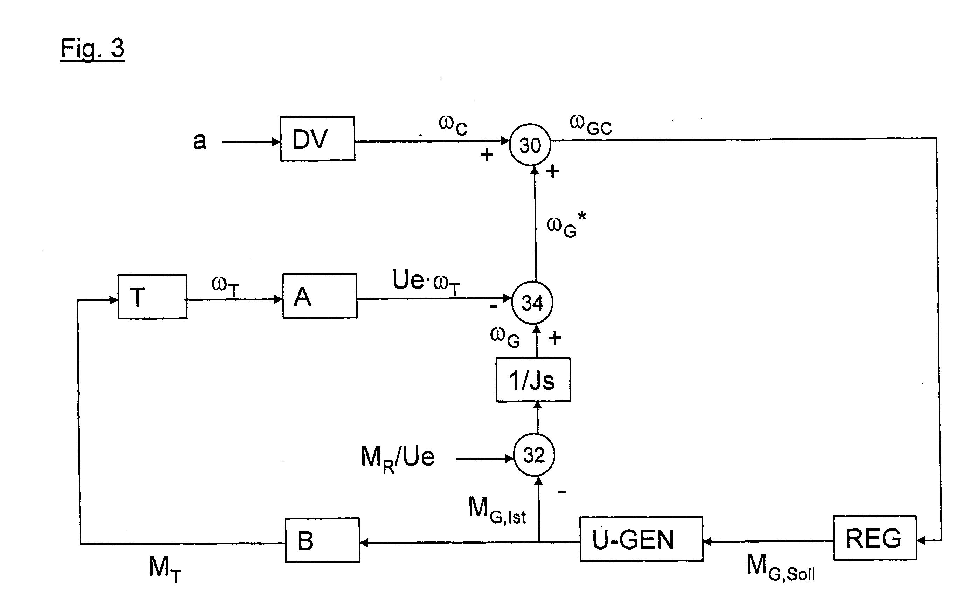

Die Zusammenhänge zwischen den unterschiedlichen physikalischen Größen sollen anhand des Wirkungsplans der Figur 3 näher erläutert werden. In dem Wirkungsplan sind die unterschiedlichen Größen durch Übertragungsfunktionen, die jeweils als Kasten dargestellt sind, miteinander verknüpft.

Oben links ist die gemessene Beschleunigung $a$ der Gondel eingezeichnet. Die Übertragungsfunktion DV bildet diese Beschleunigung $a$ auf die bereits erläuterte Kompensationsdrehzahl $\omega_C$ ab. Bei der Verknüpfung 30 wird diese Kompensationsdrehzahl $\omega_C$ zur im gondelfesten Bezugssystem gemessenen Generatordrehzahl $\omega_G^*$ hinzu addiert. Ergebnis ist die korrigierte Drehzahl $\omega_{GC}$, die durch die Übertragungsfunktion REG des Drehzahlreglers in den Sollwert für das Generatormoment $M_{G,Soll}$ umgewandelt wird.

Die Übertragungsfunktion U-GEN des Systems aus Hauptumrichter und Generator erzeugt hieraus den Istwert des Generatormoments $M_{G,Ist}$. Dieser Istwert des Generatormoments wird durch die Übertragungsfunktion B zu einem auf den Turm wirkenden Moment $M_T$. Die Übertragungsfunktion T führt von dem Moment $M_T$ zu einer Drehzahl $\omega_T$ des Turms beziehungsweise der Gondel und wird von den mechanischen Eigenschaften des Turms bestimmt. Der Turm bildet ein schwach gedämpftes, schwingfähiges System, das durch das Moment $M_T$ angeregt wird. Ergebnis ist eine Drehzahl beziehungsweise Winkelgeschwindigkeit $\omega_T$ des Turms/der Gondel, zu betrachten im erdbodenfesten Bezugssystem.

Hieraus wird durch die Übertragungsfunktion A, die von den Eigenschaften des Triebstrangs und des Turms, insbesondere vom Übersetzungsverhältnis des Getriebes, beeinflusst wird, eine Drehzahl $Ue \cdot \omega_T$. Diese spiegelt den Einfluss des Istwerts des Generatormoments $M_{G,Ist}$ auf die Generatordrehzahl wider, soweit sie über den Turm vermittelt wird.

Weitere Einflussgröße auf die gemessene Generatordrehzahl $\omega_G{}^*$ ist die Differenz zwischen dem Istwert des Generatormoments $M_{G,Ist}$ und des aufgrund des Windes vom Rotor ausgeübten Moments $M_R$, geteilt durch das Übersetzungsverhältnis Ue. Diese Differenz entspricht dem effektiv auf die Generatorwelle wirkenden Moment. Die Differenzbildung wird durch die Verknüpfung 32 veranschaulicht. Integration beziehungsweise Anwenden der Übertragungsfunktion 1/Js führt zur kompensierten Drehzahl $\omega_G$ des Generators. Differenzbildung mit dem Drehzahlwert $Ue \cdot \omega_T$ in der Verknüpfung 34 führt zur im gondelfesten Bezugsystem gemessenen Drehzahl $\omega_G{}^*$.

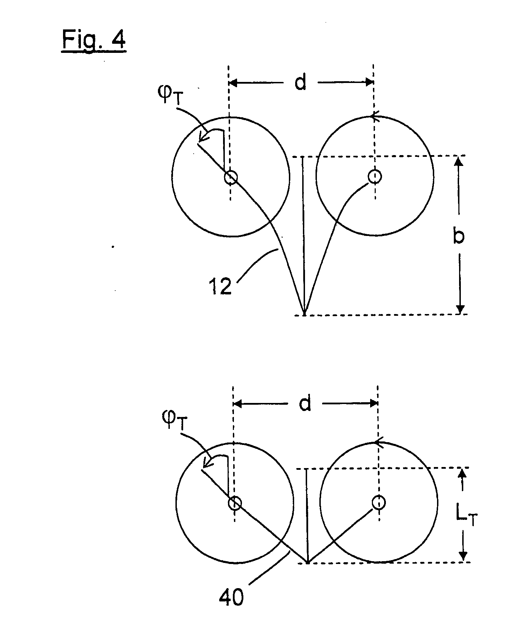

Figur 4 dient zur Veranschaulichung der effektiven Turmhöhen $L_T$. Im oberen Bereich der Figur sind die Verhältnisse für einen sich biegenden Turm 12 mit einer realen Höhe $b$ bei einer Schwingung dargestellt. Bei einer Schwingung des Turms 12 mit einer Amplitude d ergibt sich ein bestimmter Maximalwert des Winkels $\varphi_T$, der unter anderem von der Biegung des Turms 12 abhängig ist.

Im unteren Bereich der Figur 4 ist ein Modell skizziert, dass von einem starren Turm 40 ausgeht. Es wird diejenige effektive Turmhöhe $L_T$ angenommen, bei der sich bei einem solchen starren Turm 40 bei einer dem oberen Teil der Figur entsprechenden Amplitude d der Schwingung derselbe Winkel $\varphi_T$ der Gondel einstellt.

**Patentansprüche**

1. Verfahren zur Drehzahlregelung einer Windenergieanlage (10), die einen Turm (12), eine auf dem Turm (12) befestigte Gondel (14) und einen Triebstrang aufweist, der einen um eine Achse drehbar in der Gondel (14) gelagerten Rotor (16) mit mindestens einem Rotorblatt (18) und einen von dem Rotor (16) angetriebenen Generator umfasst, mit den folgenden Schritten:

   • Messen einer Drehzahl ($\omega_G{}^*$) eines Elements des Triebstrangs, das entsprechend einem Übersetzungsverhältnis (Ue) mit dem Rotor rotiert,
   • Messen einer Bewegung der Gondel (14) relativ zum Erdboden,
   • Regelung der Drehzahl auf einen Drehzahlsollwert mit einem Drehzahlregler, der ein Generatormoment ($M_G$) und/oder einen Blatteinstellwinkel ($\theta$) vorgibt, **dadurch gekennzeichnet, dass**
   • die in einem gondelfesten Bezugssystem gemessene Drehzahl ($\omega_G{}^*$) auf Grundlage der gemessenen Bewegung der Gondel in eine korrigierte Drehzahl ($\omega_{GC}$) umgerechnet wird, die der Drehzahl des Rotors (16) in einem erdbodenfesten Bezugssystem multipliziert mit dem Übersetzungsverhältnis (Ue) entspricht, und
   • der Drehzahlregler als Eingangsgröße die korrigierte Drehzahl ($\omega_{GC}$) verwendet.

2. Verfahren nach Anspruch 1, **dadurch gekennzeichnet, dass** auf Grundlage der gemessenen Bewegung der Gondel (14) eine Kompensationsdrehzahl ($\omega_C$) ermittelt wird, die eine Drehung der Gondel (14) um die Achse des Rotors (16) herum repräsentiert, und das Umrechnen der gemessenen Drehzahl ($\omega_G{}^*$) in die korrigierte Drehzahl ($\theta_{GC}$) durch Addieren der gemessenen Drehzahl ($\omega_G{}^*$) und der Kompensationsdrehzahl ($\omega_C$) erfolgt.

3. Verfahren nach Anspruch 1 oder 2, **dadurch gekennzeichnet, dass** das Messen der Bewegung der Gondel (14) durch Messen einer Beschleunigung (a) in einer Richtung erfolgt, die orthogonal zur Achse des Rotors (16) und orthogonal zu einer Längsachse des Turms (12) ist.

4. Verfahren nach Anspruch 2 oder 3, **dadurch gekennzeichnet, dass** das Ermitteln der Kompensationsdrehzahl ($\omega_C$) eine Division durch eine effektive Turmhöhe ($L_T$) umfasst, die geringer ist als die reale Höhe (b) des Turms (12).

5. Verfahren nach einem der Ansprüche 1 bis 4, **dadurch gekennzeichnet, dass** das Messen der Bewegung der Gondel (14) durch Messen einer Winkelbeschleunigung um die Achse des Rotors (16) herum erfolgt.

6. Verfahren nach einem der Ansprüche 2 bis 5, **dadurch gekennzeichnet, dass** das Ermitteln der Kompensationsdrehzahl ($\omega_C$) ein Integrieren einer gemessenen Beschleunigung über die Zeit umfasst.

7. Verfahren nach einem der Ansprüche 1 bis 6, **dadurch gekennzeichnet, dass** das Messen der Bewegung der Gondel (14) durch Messen eines Winkels ($\varphi_T$) der Gondel (14) um die Achse des Rotors (16) herum relativ zum Erdboden erfolgt.

8. Windenergieanlage (10) mit

• einem Turm (12),
• einer auf dem Turm (12) befestigten Gondel (14),
• einem Triebstrang, der einen um eine Achse drehbar in der Gondel (14) gelagerten Rotor (16) mit mindestens einem Rotorblatt (18) und einen von dem Rotor (16) angetriebenen Generator umfasst,
• einer Einrichtung zur Messung einer Drehzahl ($\omega_G$*) eines Elements des Triebstrangs, das entsprechend einem Übersetzungsverhältnis (Ue) mit dem Rotor (16) rotiert,
• einer Einrichtung zur Messung einer Bewegung der Gondel (14) relativ zum Erdboden,
• einem Drehzahlregler, der zur Regelung der Drehzahl auf einen Drehzahlsollwert durch Vorgeben eines Generatormoments ($M_G$) und/oder eines Blatteinstellwinkels ($\theta$) ausgebildet ist, **dadurch gekennzeichnet, dass**
• eine Einrichtung zur Umrechnung der in einem gondelfesten Bezugssystem gemessenen Drehzahl ($\omega_G$*) in eine korrigierte Drehzahl ($\omega_{GC}$) auf Grundlage der gemessenen Bewegung der Gondel, wobei die korrigierte Drehzahl ($\omega_{GC}$) der Drehzahl des Rotors (16) in einem erdbodenfesten Bezugssystem multipliziert mit dem Übersetzungsverhältnis (Ue) entspricht, vorhanden ist und
• der Drehzahlregler so mit der Einrichtung zur Umrechnung verbunden ist, dass er als Eingangsgröße die korrigierte Drehzahl ($\omega_{GC}$) verwendet.

9. Windenergieanlage (10) nach Anspruch 8, **dadurch gekennzeichnet, dass** die Einrichtung zur Umrechnung so ausgebildet ist, dass sie auf Grundlage der gemessenen Bewegung der Gondel (14) eine Kompensationsdrehzahl ($\omega_C$) ermittelt, die eine Drehung der Gondel (14) um die Achse des Rotors (16) herum repräsentiert, und die korrigierte Drehzahl ($\omega_{GC}$) durch Addieren der gemessenen Drehzahl ($\omega_G$*) und der Kompensationsdrehzahl ($\omega_C$) ermittelt.

10. Windenergieanlage (10) nach Anspruch 8 oder 9, **dadurch gekennzeichnet, dass** die Einrichtung zum Messen der Bewegung der Gondel (14) ein Beschleunigungssensor ist, der so angeordnet ist, dass er die Beschleunigung (a) der Gondel (14) in einer Richtung misst, die orthogonal zur Achse des Rotors (16) und orthogonal zu einer Längsachse des Turms (12) angeordnet ist.

11. Windenergieanlage (10) nach Anspruch 9 oder 10, **dadurch gekennzeichnet, dass** die Einrichtung zur Umrechnung so ausgebildet ist, dass sie beim Ermitteln der Kompensationsdrehzahl ($\omega_C$) eine Division durch eine effektive Turmhöhe ($L_T$), die geringer ist als die reale Höhe (b) des Turms (12), ausführt.

12. Windenergieanlage (10) nach einem der Ansprüche 8 bis 11, **dadurch gekennzeichnet, dass** die Einrichtung zum Messen der Bewegung der Gondel (14) ein Winkelbeschleunigungssensor ist, der so angeordnet ist, dass er die Winkelbeschleunigung um die Achse des Rotors (16) herum misst.

13. Windenergieanlage (10) nach einem der Ansprüche 9 bis 12, **dadurch gekennzeichnet, dass** die Einrichtung zur Umrechnung so ausgebildet ist, dass sie beim Ermitteln der Kompensationsdrehzahl ($\omega_C$) eine gemessene Beschleunigung über die Zeit integriert.

14. Windenergieanlage (10) nach einem der Ansprüche 8 bis 13, **dadurch gekennzeichnet, dass** die Einrichtung zum Messen der Bewegung der Gondel (14) ein Neigungs- oder Gyroskopsensor ist, der so angeordnet ist, dass er einen Winkel der Gondel (14) um die Achse des Rotors (16) herum relativ zum Erdboden misst.

**Claims**

1. A method for controlling the rotational speed of a wind turbine (10) having a tower (12), a nacelle (14) mounted on the tower (12) and a drive train which includes a rotor (16) having at least one rotor blade (18), the rotor (16) being rotatably mounted about an axis in the nacelle (14), and a generator driven by the rotor (16); comprising the following steps:

[DB1] measuring a rotational speed ($\omega_G$*) of a component of the drive train which rotates with the rotor (16) in correspondence to a transmission ratio (Ue);

measuring a movement of the nacelle (14) relative to the ground;
controlling the rotational speed to a rotational speed setpoint with a rotational speed controller which outputs a generator torque ($M_G$) and/or a blade pitch angle ($\theta$); **characterized in that**
the rotational speed ($\omega_G$*) measured in a nacelle-fixed reference system is converted on the basis of the measured movement of the nacelle, into a corrected rotational speed ($\omega_{GC}$) which corresponds to the rotational speed of the rotor (16) in a terrestrial reference system multiplied by the transmission ratio (Ue); and,
the rotational speed controller uses the corrected rotational speed ($\omega_{GC}$) as an input quantity.

2. The method of claim 1, **characterized in that**
a compensation rotational speed ($\omega_C$), which represents a rotation of the nacelle (14) about the axis of the rotor (16) is determined on the basis of the measured movement of the nacelle (14) and,
the conversion of the measured rotational speed ($\omega_G$*) into the corrected rotational speed ($\omega_{GC}$) is carried out by adding the measured rotational speed ($\omega_G$*) and the compensation rotational speed ($\omega_C$).

3. The method of claim 1 or 2, **characterized in that** the measuring of the movement of the nacelle (14) is done by measuring an acceleration (a) in a direction which is orthogonal to the axis of the rotor (16) and orthogonal to the longitudinal axis of the tower (12).

4. The method of claim 2 or 3, **characterized in that** the determination of the compensation rotational speed ($\omega_C$) includes dividing by an effective tower height ($L_T$) which is less than the actual height (b) of the tower (12).

5. The method of any of the claims 1 to 4, **characterized in that** the measurement of the movement of the nacelle (14) is done by measuring an angular acceleration about the axis of the rotor (16).

6. The method of any of the claims 2 to 5, **characterized in that** the determination of the compensation rotational speed ($\omega_C$) includes integrating a measured acceleration as a function of time.

7. The method of any of the claims 1 to 6, **characterized in that** the measurement of the movement of the nacelle (14) is done by measuring an angle ($\varphi_T$) of the nacelle (14) about the axis of the rotor (16) relative to the ground.

8. A wind turbine (10) comprising:

   • a tower (12),
   • a nacelle (14) mounted on said tower (12),
   • a drive train including a rotor (16) and a generator driven by said rotor (16); said rotor (16) having at least one rotor blade (18) and being rotatably mounted about an axis in said nacelle (14),
   • a measuring unit for measuring a rotational speed ($\omega_G$*) of a component of said drive train which rotates with said rotor (16) in correspondence to a transmission ratio (Ue),
   • a measuring unit for measuring a movement of said nacelle (14) relative to the ground,
   • a rotational speed controller configured to control the rotational speed to a rotational speed setpoint by outputting a generator torque ($M_G$) and/or a blade pitch angle ($\theta$), **characterized in that**
   • a converting unit is provided for converting, on the basis of the measured movement of the nacelle, said rotational speed ($\omega_G$*) measured in a nacelle-fixed reference system into a corrected rotational speed ($\omega_{GC}$) which corresponds to said rotational speed of said rotor (16) in a terrestrial reference system multiplied by said transmission ratio (Ue), and,
   • said rotational speed controller is connected to said converting unit in such a manner that said rotational speed controller uses said corrected rotational speed ($\omega_{GC}$) as an input quantity.

9. The wind turbine (10) of claim 8, **characterized in that** said converting unit is configured to determine a compensation rotational speed ($\omega_C$) on the basis of said measured movement of said nacelle (14) wherein said compensation rotational speed ($\omega_C$) represents a rotation of said nacelle (14) about said axis of the rotor (16), and said converting unit is further configured to determine said corrected rotational speed ($\omega_{GC}$) by adding said measured rotational speed ($\omega_G$*) and said compensation rotational speed ($\omega_C$).

10. The wind turbine (10) of claim 8 or 9, **characterized in that** said measuring unit for measuring the movement of the nacelle (14) is an acceleration sensor arranged so that it measures the acceleration (a) of said nacelle (14) in a direction which is orthogonal to said axis of the rotor (16) and orthogonal to a longitudinal axis of said tower (12).

11. The wind turbine (10) of claim 9 or 10, **characterized in that** said converting unit is configured to divide by an effective tower height ($L_T$), which is less than the actual height (b) of said tower (12), when determining said compensation rotational speed ($\omega_C$).

12. The wind turbine (10) of any of the claims 8 to 11, **characterized in that** said measuring unit for measuring the movement of said nacelle (14) is an angular acceleration sensor arranged so that it measures the angular acceleration about said axis of the rotor (16).

13. The wind turbine (10) of any of the claims 9 to 12, **characterized in that** said converting unit is configured to integrate a measured acceleration as a function of time when determining said compensation rotational speed ($\omega_C$).

14. The wind turbine (10) of any of the claims 8 to 13, **characterized in that** said measuring unit for measuring the movement of the nacelle (14) is an inclination sensor or a gyroscope sensor arranged so that it measures an angle of said nacelle (14) about said axis of the rotor (16) relative to the ground.

## Revendications

1. Méthode de régulation de la vitesse de rotation d'une éolienne (10) comportant une tour (12), une nacelle (14) fixée sur la tour (12) et un train d'entraînement, comprenant un rotor (16) installé dans la nacelle (14) de façon rotative autour d'un axe, avec au moins une pale de rotor (18) et un générateur entraîné par le rotor (16), avec les étapes suivantes :

   • mesure d'une vitesse de rotation ($\omega_G^*$) d'un élément du train d'entraînement en rotation solidaire avec le rotor selon un rapport de transmission (Ue),
   • mesure d'un mouvement de la nacelle (14) par rapport au sol,
   • régulation de la vitesse de rotation sur une valeur de consigne de vitesse de rotation à l'aide d'un régulateur de vitesse de rotation indiquant le couple de générateur ($M_G$) et/ou un angle de réglage de pale ($\theta$), **caractérisée en ce que**
   • la vitesse de rotation ($\omega_G^*$) mesurée dans un système de référence fixé dans la nacelle est convertie en une vitesse de rotation corrigée ($\omega_{GC}$) sur la base du mouvement mesuré de la nacelle (14), correspondant à la vitesse de rotation du rotor (16) dans un système de référence au sol, multipliée par le rapport de transmission (Ue), et
   • le régulateur de vitesse de rotation emploie la vitesse de rotation corrigée ($\omega_{GC}$) comme grandeur d'entrée.

2. Méthode selon la revendication 1, **caractérisée en ce qu'**une vitesse de rotation de compensation ($\omega_C$) représentant une rotation de la nacelle (14) autour de l'axe du rotor (16) est déterminée sur la base du mouvement mesuré de la nacelle (14), et **en ce que** la conversion de la vitesse de rotation mesurée ($\omega_G^*$) dans la vitesse de rotation corrigée ($\omega_{GC}$) est effectuée en additionnant la vitesse de rotation mesurée ($\omega_G^*$) et la vitesse de rotation de compensation ($\omega_C$).

3. Méthode selon la revendication 1 ou 2, **caractérisée en ce que** la mesure du mouvement de la nacelle (14) est effectuée en mesurant une accélération (a) dans une direction, laquelle est orthogonale à l'axe du rotor (16) et orthogonale à un axe longitudinal de la tour (12).

4. Méthode selon la revendication 2 ou 3, **caractérisée en ce que** la détermination de la vitesse de rotation de compensation ($\omega_C$) comprend une division par une hauteur de tour effective ($L_T$), laquelle est inférieure à la hauteur réelle (b) de la tour (12).

5. Méthode selon l'une des revendications 1 à 4, **caractérisée en ce que** la mesure du mouvement de la nacelle (14) est effectuée en mesurant une accélération angulaire autour de l'axe du rotor (16).

6. Méthode selon l'une des revendications 2 à 5, **caractérisée en ce que** la détermination de la vitesse de rotation de compensation ($\omega_C$) comprend une intégration d'une accélération mesurée sur la durée.

7. Méthode selon l'une des revendications 1 à 6, **caractérisée en ce que** la mesure du mouvement de la nacelle (14) est effectuée en mesurant un angle ($\varphi_T$) de la nacelle (14) autour de l'axe du rotor (16) par rapport au sol.

**8.** Éolienne (10) avec

- une tour (12),
- une nacelle (14) fixée sur la tour (12),
- un train d'entraînement comprenant un rotor (16) installé dans la nacelle (14) de façon rotative autour d'un axe, avec au moins une pale de rotor (18) et un générateur entraîné par le rotor (16),
- un dispositif pour la mesure d'une vitesse de rotation ($\omega_G$*) d'un élément du train d'entraînement en rotation solidaire avec le rotor (16) selon un rapport de transmission (Ue),
- un dispositif pour la mesure d'un mouvement de la nacelle (14) par rapport au sol,
- un régulateur de vitesse de rotation conçu pour réguler la vitesse de rotation sur une valeur de consigne de vitesse de rotation, en spécifier le couple de générateur ($M_G$) et/ou un angle de réglage de pale ($\theta$), **caractérisée en ce que**
- il est prévu un dispositif de conversion de la vitesse de rotation ($\omega_G$*) mesurée dans un système de référence fixé dans la nacelle en une vitesse de rotation corrigée ($\omega_{GC}$) sur la base du mouvement mesuré de la nacelle (14), sachant que la vitesse de rotation corrigée ($\omega_{GC}$) correspond à la vitesse de rotation du rotor (16) dans un système de référence au sol, multipliée par le rapport de transmission (Ue), et
- le régulateur de vitesse de rotation est relié au dispositif de conversion emploie la vitesse de rotation corrigée ($\omega_{GC}$) comme grandeur d'entrée.

**9.** Éolienne (10) selon la revendication 8, **caractérisée en ce que** le dispositif de conversion est conçu pour déterminer une vitesse de rotation de compensation ($\omega_C$) représentant une rotation de la nacelle (14) autour de l'axe du rotor (16) 'sur la base du mouvement mesuré de la nacelle (14), et pour déterminer la vitesse de rotation corrigée ($\omega_{GC}$) en additionnant la vitesse de rotation mesurée ($\omega_G$*) et la vitesse de rotation de compensation ($\omega_C$).

**10.** Éolienne (10) selon la revendication 8 ou 9, **caractérisée en ce que** le dispositif pour la mesure du mouvement de la nacelle (14) est un capteur d'accélération agencé de manière à mesurer l'accélération (a) de la nacelle (14) dans une direction orthogonale à l'axe du rotor (16) et orthogonale à un axe longitudinal de la tour (12).

**11.** Éolienne (10) selon la revendication 9 ou 10, **caractérisée en ce que** le dispositif de conversion est conçu de manière à effectuer une division par une hauteur de tour effective ($L_T$) inférieure à la hauteur réelle (b) de la tour (12), pour la détermination de la vitesse de rotation de compensation ($\omega_C$).

**12.** Éolienne (10) selon l'une des revendications 8 à 11, **caractérisée en ce que** le dispositif pour la mesure du mouvement de la nacelle (14) est un capteur d'accélération angulaire, agencé de manière à mesurer l'accélération angulaire autour de l'axe du rotor (16).

**13.** Éolienne (10) selon l'une des revendications 9 à 12, **caractérisée en ce que** le dispositif de conversion est conçu de manière à intégrer une accélération mesurée sur la durée, pour la détermination de la vitesse de rotation de compensation ($\omega_C$).

**14.** Éolienne (10) selon l'une des revendications 8 à 13, **caractérisée en ce que** le dispositif pour la mesure du mouvement de la nacelle (14) est un capteur d'inclinaison ou de gyroscope, agencé de manière à mesurer un angle de la nacelle (14) autour de l'axe du rotor (16) par rapport au sol.

Fig. 2

Fig. 1

Fig. 3

EP 2 426 352 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1643122 A2
- EP 1816347 A1
- EP 2107236 A1
- EP 2063110 A1